# EUROPEAN PATENT SPECIFICATION

(11) **EP 4 183 239 B1**
(45) Date of publication and mention of the grant of the patent: **15.10.2025**
(21) Application number: 21209908.9
(22) Date of filing: 23.11.2021
(51) Int. Cl.: A01B 59/06, A01B 63/102, B62D 49/02

(54) **TRACTOR WORK EQUIPMENT LINKAGE**
GESTÄNGE FÜR TRAKTORARBEITSGERÄT
LIAISON D'ÉQUIPEMENT DE TRAVAIL DE TRACTEUR

(43) Date of publication of application: 24.05.2023
(73) Proprietor: Farmi Forest Oy, 74120 Iisalmi (FI)
(72) Inventor: Pelkonen, Petri, 74120 Iisalmi (FI)
(74) Representative: Kolster Oy Ab

(56) References cited:
- JP-A- 2002 330 603
- JP-A- 2006 109 738
- JP-U- S5 358 109
- KR-U- 20100 002 302

## Description

### FIELD OF THE INVENTION

The invention relates to attaching work equipment to tractors, particularly to agricultural tractors.

### BACKGROUND OF THE INVENTION

Agricultural tractors have been used as general-purpose machines and platforms; wherein various work equipment have been connected based on the need at hand. These work equipment are for example typical agricultural tools like ploughs, spreader beams, harrows or other equipment like blades or cranes. A general and standardized attachment scheme for the above-mentioned machines has been created, which is the three-point attachment scheme also known as three-point linkage or three-point hitch system. The three-point linkage system includes lifting arms to raise and lower the work equipment for transport and for operation. Their dimensions have increased with the size of the base machines. Currently, there are three known work equipment attachments in use; CAT 1, CAT 2 and CAT3. These three-point linkage systems have their advantages, however also limitations.

One of the problems associated with the above arrangement is the system has limited possibility to attach heavy work equipment and on the other hand such heavy work equipment that cause high torque to the tractor frame structure (along its longitudinal axis).

JPS5358109U (1978-05-18) discloses a tractor three-point linkage system.

JP2002330603A (ISEKI AGRICULT MACH, 2002-11-19) discloses an apparatus for connecting an equipment, which is rotatably pivoting a shaking member of the apparatus.

JP2006109738A (MITSUBISHI AGRICULT MACH, 2006-04-27) discloses an equipment connecting mechanism, which is swingably linked to a working vehicle by two right and two left points, and an input shaft of driving power is arranged from the vehicle to transmission shaft in the equipment with an urging means for lifting a yoke joint in the transmission shaft of the equipment.

### BRIEF DESCRIPTION OF THE INVENTION

An objective of the present invention is thus to provide a new arrangement for implementing the attachment. The arrangement is characterized by what is stated in the independent claims. Some embodiments of the invention are disclosed in the dependent claims.

The new linkage system based on the invention does not exclude the above-mentioned CAT 1 - CAT 3 attachments or their utilization in the tractor but allows one additional stable implement arrangement and controlled transfer of implement forces to the tractor chassis. Therefore, the tractor's mass and properties can be used to the maximum for stability and tall torque, when using work equipment. The arrangement of the implement also enables safe coupling and uncoupling of the work equipment from the tractor, which must be repeated within a reasonable time.

The invention is based on the idea of providing an additional work equipment linkage arrangement which supports heavy work equipment while maintaining the possibility to attach the standard CAT 1 - CAT 3 equipment using the three-point linkage system. The key components of the arrangement are a subframe, which is to be attached to the tractor frame structure, a work equipment adapter, which is to be attached to a work equipment and a linkage mechanism, which grabs the work equipment and lifts it against the subframe supports so that the work equipment is firmly mounted to the subframe. The subframe and the linkage mechanism are positioned to the tractor frame structure so that lifting arms of the linkage mechanism receive the movement energy from the tractor's three-point linkage system lifting arms. The mounting is fastened by inserting spindles to the aligned spindle openings in the adapter and in the subframe supports.

### BRIEF DESCRIPTION OF THE DRAWINGS

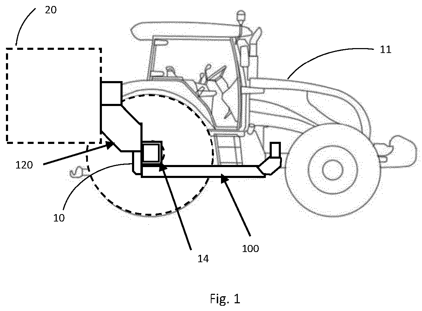

In the following the invention will be described in greater detail by means of some embodiments with reference to the accompanying drawings, in which
Figure 1 illustrates schematically a tractor and the tractor work equipment linkage arrangement;

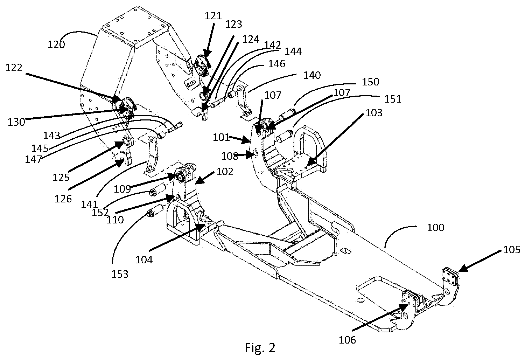

Figure 2 illustrates schematically work equipment arrangement components in a decoupled position;
Figure 3 illustrates schematically from the side view a cross-section of the work equipment and the tractor lifting arm when the tractor lifting arms are at the low position;
Figure 4 illustrates schematically from the side view a cross-section of the work equipment arrangement when the tractor lifting arms are raised and the work equipment adapter is positioned against the subframe supports;
Figure 5 illustrates schematically from the front view with respect to the tractor an embodiment of the work equipment arrangement, where lifting pins (142, 143) are displaced from gripping pins (144,145); further in a position, where the tractor lifting arms are raised and the work equipment adapter is positioned against the subframe supports (101, 102);

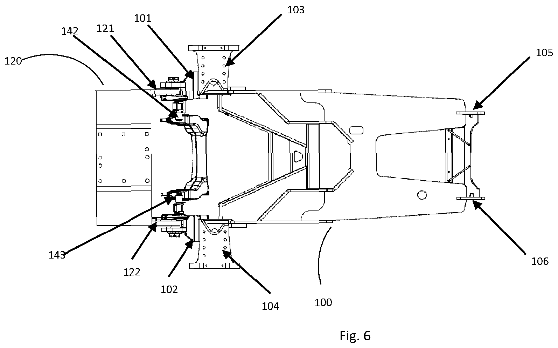

Figure 6 illustrates schematically from the top view the work equipment arrangement when the tractor lifting arms are raised and the work equipment adapter is positioned against the subframe supports;

### DETAILED DESCRIPTION OF THE INVENTION

It will be obvious to a person skilled in the art that, as the technology advances, the inventive concept can be implemented in various ways. The invention and its embodiments are not limited to the examples described above but may vary within the scope of the claims.

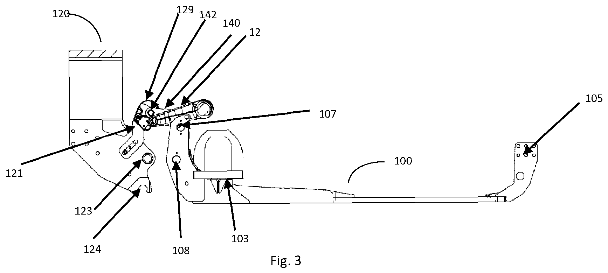

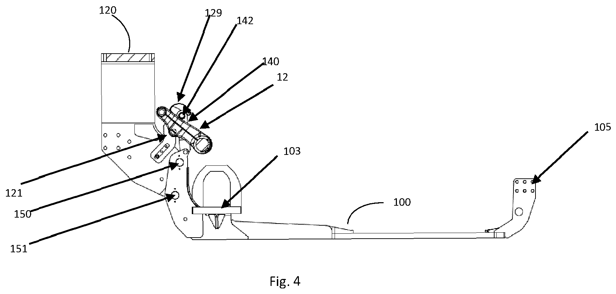

According to an embodiment of the invention, the tractor work equipment linkage arrangement (10) is attached to the tractor frame structure so that tractor lifting arms (12, 13) can lift the lifting arms (140, 141) via the lifting pins (142, 143), and thus also lift the work equipment (20) via the gripping pins (144, 145). The dimension and position of the lifting arms (140, 141) are adjusted so that the vertical position of the gripping pins (144, 145) can be adjusted to fit the grabs (129, 130) in the work equipment adapter (120) attached to the work equipment (20) when placed on the ground. This is illustrated in Fig. 3. The dimensions are further adjusted so that the movement of the tractor lifting arms (12, 13) moves the work equipment (20) with the work equipment adapter (120) against the subframe (100) supports (101, 102) such that the spindle openings (123, 124, 125, 126) of the work equipment adapter (120) and spindle openings (107, 108, 109, 110) of the subframe (100) are aligned. The fastening of the work equipment adapter (120) can be done by inserting spindles (150, 151, 152, 153) to the aligned spindle openings (123, 124, 125, 126) of the work equipment adapter (120) and spindle openings (107, 108, 109, 110) of the subframe (100). This is illustrated in Fig. 4. The spindles (150, 151, 152, 153) can be secured for example with cotter pins in the spindles or by providing screw threads in the spindles (150, 151, 152, 153) and by providing nuts to the spindles (150, 151, 152, 153). The dimensions of the spindles (150, 151, 152, 153) can be machined with a tight fit to provide very stable operation for example when using the work equipment (20) for a reasonably long period of time. Alternatively, the dimensions of the spindles (150, 151, 152, 153) can be provided with a less tight fit to provide easier operation of mounting and dismounting of the work equipment, when mounting and dismounting need to be repeated more frequently.

According to another embodiment of the invention, the subframe (100) first fixing point (103) and second fixing point (104) can be attached to the rear axle (14) of the tractor (11). In this embodiment, the arrangement (10) can implement controlled transfer of the forces to the frame structure of the tractor caused by torque originating by the work equipment.

According to another embodiment of the invention the lifting pins (142,143) in the lifting arms (140, 141) are provided with bearings (146, 147) on the other side of the lifting arms (140, 141) so that the bearings (146, 147) are to be fitted on top of the tractor lifting arms (12, 13) to provide a fluent motion of the pins (142, 143), when the tractor lifting arms (12, 13) are lifted or lowered.

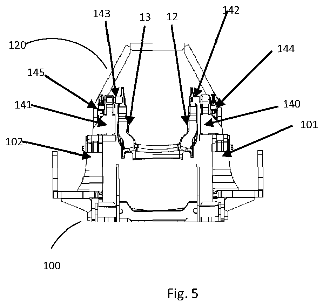

According to another embodiment of the invention the lifting arms (140, 141) comprise lifting pins (142, 143) on one side of the lifting arms (140, 141) and gripping pins (144, 145) on the other side of the lifting arms (140, 141) displaced from the lifting pins (142, 143). In this embodiment, the placement of the lifting pins (142, 143) in relation to the gripping pins (144, 145) is adjusted to provide optimal lifting energy to the lifting arms (140, 141). This is illustrated in a front view of the arrangement (10) in Fig. 5, wherein the lifting pins (142, 143) are displaced from the gripping pins (144, 145).

According to another embodiment of the invention the lifting arms (140, 141) comprise lifting pins (142, 143) on one side of the lifting arms (140, 141) and gripping pins (144, 145) on the other side of the lifting arms (140, 141) which are aligned with the lifting pins (142, 143). In this embodiment the lifting pins (142, 143) and the gripping pins (144, 145) can be attached as single components, respectively, extending on both side of the lifting arms (140, 141).

According to another embodiment of the invention, the lower spindles, that is, the second and the fourth spindle (151,153) are fixed to the subframe (100). In this embodiment, the second and the fourth spindle opening (124, 126) of the work equipment adapter (120) are slots so the work equipment adapter (120) can be fitted on top of the fixed second and fourth spindle (151,153), respectively. The first and the third spindle (150, 152) are to be inserted in the spindle openings (107, 109) of the subframe (100) and the spindle openings (123, 125) of the work equipment adapter (120).

## Claims

1. A tractor work equipment linkage arrangement (10) is **charac**- **terized** by comprising
a subframe (100), which is to be attached to chassis of a tractor (11) with a three-point linkage system, the subframe (100) comprising a first fixing point (103), a second fixing point (104), a third fixing point (105) and a fourth fixing point (106), a first support (101) comprising a first and a second spindle opening (107, 108), and a second support (102) comprising a third and a fourth spindle opening (109, 110);
a first lifting arm (140), which is pivotally attached from its first end to the first support (101), a second lifting arm (141), which is pivotally attached from its first end to the second support (102),
wherein the first lifting arm (140) is comprising a first lifting pin (142) on one side of the first lifting arm (140) and first gripping pin (144) on the other side of the first lifting arm (140),
and wherein the second lifting arm (141) is comprising a second lifting pin (143) on one side of the second lifting arm (141) and a second gripping pin (145) on the other side of the second lifting arm (141), and
a work equipment adapter (120), which is to be attached to a work equipment (20), the work equipment adapter (120) comprising a first link arm (121) and a second link arm (122), a first, a second, a third and a fourth spindle opening (123, 124, 125, 126), wherein the first link arm (121) comprises a first grab (129) and the second link arm (122) comprises a second grab (130),
wherein the first gripping pin (144) is to be fitted to the first grab (129) and the second gripping pin (145) is to be fitted to second grab (130), and;
wherein the lifting pins (142, 143) are to be fitted on top of the tractor lifting arms (12,13).

2. A tractor linkage arrangement according to claim, **character- ized** in that the subframe (100) first fixing point (103) and second fixing point (104) are to be attached to the rear axle (14) of the tractor (11).

3. A tractor linkage arrangement as claimed in any one of the preceding claims, **characterized in that** the first lifting pin (142) is provided with a first bearing (146) and the second lifting pin (143) is provided with a second bearing (147).

4. A tractor linkage arrangement as claimed in any one of the preceding claims, **characterized in that** the lifting pins (142, 143) are to be fitted on top of the tractor lifting arms (12,13) whereby the tractor lifting arms (12, 13) lift the work equipment (20) via the work equipment adapter (120), the respective lifting pins (142, 143), the respective lifting arms (140, 141) and the respective gripping pins (144, 145) such that the spindle openings (123, 124, 125, 126) of the work equipment (120) are aligned with the spindle openings (107, 108, 109, 110) of the first support (101) and the second support (102).

5. A tractor linkage arrangement as claimed in any one of the preceding claims, **characterized in that** the work equipment (20) is removably mounted via the work equipment adapter (120) to the first support (101) and to the second support (102), and wherein a first, a second, a third and a fourth spindle (150, 151, 152, 153) are removably inserted to the first, the second, the third and fourth spindle opening (107, 108, 109, 110) of the first and the second support (101, 102) respectively, and further inserted to the first, the second, the third and the fourth spindle opening (123, 124, 125, 126) of the work equipment adapter (120), respectively.

6. A tractor linkage arrangement as claimed in any one of the preceding claims, **characterized in that** whereby the tractor lifting arms (12, 13) lower the work equipment (20) via the work equipment adapter (120), the respective lifting pins (142, 143), the respective lifting arms (140, 141) and the respective gripping pins (144, 145).

7. A tractor linkage arrangement as claimed in any one of the preceding claims, **characterized in that** the first lifting arm (140) comprises a first lifting pin (142) on one side of the first lifting arm (140) and a first gripping pin (144) on the other side of the lifting arm (140) displaced from the first lifting pin (142), and further that the second lifting arm (141) comprises a second lifting pin (143) on one side of the second lifting arm (141) and a second gripping pin (145) on the other side of the second lifting arm (141) displaced from the second lifting pin (143).

8. A tractor linkage arrangement as claimed in any one of the preceding claims, **characterized in that** the first lifting arm (140) comprises a first lifting pin (142) on one side of the first lifting arm (140) and a first gripping pin (144) on the other side of the lifting arm (140) aligned with the first lifting pin (142), and further that the second lifting arm (141) comprises a second lifting pin (143) on one side of the second lifting arm (141) and a second gripping pin (145) on the other side of the second lifting arm (141) aligned from the second lifting pin (143).

9. A tractor linkage arrangement as claimed in any one of the preceding claims, **characterized in that** the second and the fourth spindle (151,153) are fixed to the subframe (100), and the second and the fourth spindle opening (124, 126) of the work equipment adapter (120) are slots such that they are to be adjusted on top of the second and fourth spindle (151,153), respectively.

10. A tractor linkage arrangement as claimed in any one of the preceding claims, **characterized in that** different work equipment adapters (120) are to be attached to different work equipment (20).

## Patentansprüche

1. Gestängeanordnung (10) für Traktorarbeitsgerät, **dadurch gekennzeichnet, dass** sie umfasst:
einen Unterrahmen (100), der mit einem Dreipunkt-Gestängesystem an einem Fahrgestell eines Traktors (11) anzubringen ist, wobei der Unterrahmen (100) einen ersten Befestigungspunkt (103), einen zweiten Befestigungspunkt (104), einen dritten Befestigungspunkt (105) und einen vierten Befestigungspunkt (106), eine erste Stütze (101), die eine erste und eine zweite Spindelöffnung (107, 108) umfasst, und eine zweite Stütze (102) umfasst, die eine dritte und eine vierte Spindelöffnung (109, 110) umfasst;
einen ersten Hebearm (140), der schwenkbar von seinem ersten Ende an der ersten Stütze (101) angebracht ist, einen zweiten Hebearm (141), der schwenkbar von seinem ersten Ende an der zweiten Stütze (102) angebracht ist,
wobei der erste Hebearm (140) einen ersten Hebestift (142) auf einer Seite des ersten Hebearms (140) und einen ersten Greifstift (144) auf der anderen Seite des ersten Hebearms (140) umfasst,
und wobei der zweite Hebearm (141) einen zweiten Hebestift (143) auf einer Seite des zweiten Hebearms (141) und einen zweiten Greifstift (145) auf der anderen Seite des zweiten Hebearms (141) umfasst, und
einen Arbeitsgerätadapter (120), der an einem Arbeitsgerät (20) anzubringen ist, wobei der Arbeitsgerätadapter (120) einen ersten Verbindungsarm (121) und einen zweiten Verbindungsarm (122), eine erste, eine zweite, eine dritte und eine vierte Spindelöffnung (123, 124, 125, 126) umfasst, wobei der erste Verbindungsarm (121) einen ersten Greifer (129) umfasst und der zweite Verbindungsarm (122) einen zweiten Greifer (130) umfasst,
wobei der erste Greifstift (144) an dem ersten Greifer (129) einzupassen ist und der zweite Greifstift (145) an dem zweiten Greifer (130) einzupassen ist, und;
wobei die Hebestifte (142, 143) auf dem Oberteil der Traktorhebearme (12, 13) einzupassen sind.

2. Traktorgestängeanordnung nach Anspruch, **dadurch gekennzeichnet, dass** in dem Unterrahmen (100) der erste Befestigungspunkt (103) und der zweite Befestigungspunkt (104) an einer Hinterachse (14) des Traktors (11) anzubringen sind.

3. Traktorgestängeanordnung nach einem der vorhergehenden Ansprüche, **dadurch gekennzeichnet, dass** der erste Hebestift (142) mit einem ersten Lager (146) versehen ist und der zweite Hebestift (143) mit einem zweiten Lager (147) versehen ist.

4. Traktorgestängeanordnung nach einem der vorhergehenden Ansprüche, **dadurch gekennzeichnet, dass** die Hebestifte (142, 143) an der Oberseite der Traktorhebearme (12, 13) einzupassen sind, wodurch die Traktorhebearme (12, 13) das Arbeitsgerät (20) über den Arbeitsgerätadapter (120), die entsprechenden Hebestifte (142, 143), die entsprechenden Hebearme (140, 141) und die entsprechenden Greifstifte (144, 145) derart heben, dass die Spindelöffnungen (123, 124, 125, 126) des Arbeitsgeräts (120) mit den Spindelöffnungen (107, 108, 109, 110) der ersten Stütze (101) und der zweiten Stütze (102) ausgerichtet sind.

5. Traktorgestängeanordnung nach einem der vorhergehenden Ansprüche, **dadurch gekennzeichnet, dass** das Arbeitsgerät (20) über den Arbeitsgerätadapter (120) abnehmbar an die erste Stütze (101) und an die zweite Stütze (102) montiert ist, und wobei eine erste, eine zweite, eine dritte und eine vierte Spindel (150, 151, 152, 153) abnehmbar in die erste, die zweite, die dritte und die vierte Spindelöffnung (107, 108, 109, 110) der ersten beziehungsweise der zweiten Stütze (101, 102) eingesetzt sind und ferner in die erste, die zweite, die dritte beziehungsweise die vierte Spindelöffnung (123, 124, 125, 126) des Arbeitsgerätadapters (120) eingesetzt sind.

6. Traktorgestängeanordnung nach einem der vorhergehenden Ansprüche, **dadurch gekennzeichnet, dass** dadurch die Traktorhebearme (12, 13) das Arbeitsgerät (20) über den Arbeitsgerätadapter (120), die entsprechenden Hebestifte (142, 143), die entsprechenden Hebearme (140, 141) und die entsprechenden Greifstifte (144, 145) absenken.

7. Traktorgestängeanordnung nach einem der vorhergehenden Ansprüche, **dadurch gekennzeichnet, dass** der erste Hebearm (140) einen ersten Hebestift (142) auf einer Seite des ersten Hebearms (140) und einen ersten Greifstift (144) auf der anderen Seite des Hebearms (140) umfasst, der von dem ersten Hebestift (142) verlagert ist, und ferner dass der zweite Hebearm (141) einen zweiten Hebestift (143) auf einer Seite des zweiten Hebearms (141) und einen zweiten Greifstift (145) auf der anderen Seite des zweiten Hebearms (141) umfasst, der von dem zweiten Hebestift (143) verlagert ist.

8. Traktorgestängeanordnung nach einem der vorhergehenden Ansprüche, **dadurch gekennzeichnet, dass** der erste Hebearm (140) einen ersten Hebestift (142) auf einer Seite des ersten Hebearms (140) und einen ersten Greifstift (144) auf der anderen Seite des Hebearms (140) umfasst, der mit dem ersten Hebestift (142) ausgerichtet ist, und ferner dass der zweite Hebearm (141) einen zweiten Hebestift (143) auf einer Seite des zweiten Hebearms (141) und einen zweiten Greifstift (145) auf der anderen Seite des zweiten Hebearms (141) umfasst, der mit dem zweiten Hebestift (143) ausgerichtet ist.

9. Traktorgestängeanordnung nach einem der vorhergehenden Ansprüche, **dadurch gekennzeichnet, dass** die zweite und die vierte Spindel (151, 153) an dem Unterrahmen (100) befestigt sind und die zweite und die vierte Spindelöffnung (124, 126) des Arbeitsgerätadapters (120) Schlitze sind, derart dass sie auf der Oberseite der zweiten beziehungsweise vierten Spindel (151, 153) anzupassen sind.

10. Traktorgestängeanordnung nach einem der vorhergehenden Ansprüche, **dadurch gekennzeichnet, dass** unterschiedliche Arbeitsgerätadapter (120) an unterschiedlichen Arbeitsgeräten (20) anzubringen sind.

## Revendications

1. Agencement de liaison d'équipement de travail de tracteur (10) **caractérisé en ce qu'**il comprend :
un faux cadre (100) qui doit être fixé au châssis d'un tracteur (11) avec un système de liaison à trois points, le faux cadre (100) comprenant un premier point de fixation (103), un deuxième point de fixation (104), un troisième point de fixation (105) et un quatrième point de fixation (106), un premier support (101) comprenant une première et une deuxième ouverture de fusée (107, 108), et un second support (102) comprenant une troisième et une quatrième ouverture de fusée (109, 110) ;
un premier bras de levage (140) qui est fixé, de manière pivotante, de sa première extrémité au premier support (101), un second bras de levage (141) qui est fixé, de manière pivotante, de sa première extrémité au second support (102),
dans lequel le premier bras de levage (140) comprend une première broche de levage (142) d'un côté du premier bras de levage (140) et la première broche de préhension (144) de l'autre côté du premier bras de levage (140),
et dans lequel le second bras de levage (141) comprend une seconde broche de levage (143) d'un côté du second bras de levage (141) et une seconde broche de préhension (145) de l'autre côté du second bras de levage (141), et
un adaptateur d'équipement de travail (120) qui doit être fixé à un équipement de travail (20), l'adaptateur d'équipement de travail (120) comprenant un premier bras de liaison (121) et un second bras de liaison (122), une première, une deuxième, une troisième et une quatrième ouverture de fusée (123, 124, 125, 126), dans lequel le premier bras de liaison (121) comprend un premier grappin (129) et le second bras de liaison (122) comprend un second grappin (130),
dans lequel la première broche de préhension (144) doit être montée sur le premier grappin (129) et la seconde broche de préhension (145) doit être montée sur le second grappin (130) ; et
dans lequel les broches de levage (142, 143) doivent être montées sur le dessus des bras de levage de tracteur (12, 13).

2. Agencement de liaison de tracteur selon la revendication, **caractérisé en ce que** le faux cadre (100), le premier point de fixation (103) et le deuxième point de fixation (104) doivent être fixés à l'essieu arrière (14) du tracteur (11).

3. Agencement de liaison de tracteur selon l'une quelconque des revendications précédentes, **caractérisé en ce que** la première broche de levage (142) est prévue avec un premier palier (146) et la seconde broche de levage (143) est prévue avec un second palier (147).

4. Agencement de liaison de tracteur selon l'une quelconque des revendications précédentes, **caractérisé en ce que** les broches de levage (142, 143) doivent être montées sur le dessus des bras de levage de tracteur (12, 13), moyennant quoi les bras de levage de tracteur (12, 13) lèvent l'équipement de travail (20) via l'adaptateur d'équipement de travail (120), les broches de levage (142, 143) respectives, les bras de levage (140, 141) respectifs et les broches de préhension (144, 145) respectives, de sorte que les ouvertures de fusée (123, 124, 125, 126) de l'équipement de travail (120) sont alignées avec les ouvertures de fusée (107, 108, 109, 110) du premier support (101) et du second support (102).

5. Agencement de liaison de tracteur selon l'une quelconque des revendications précédentes, **caractérisé en ce que** l'équipement de travail (20) est monté, de manière amovible, via l'adaptateur d'équipement de travail (120), sur le premier support (101) et sur le second support (102), et dans lequel une première, une deuxième, une troisième et une quatrième fusée (150, 151, 152, 153) sont insérées, de manière amovible, dans la première, la deuxième, la troisième et la quatrième ouverture de fusée (107, 108, 109, 110) du premier et du second support (101, 102) respectivement, et ensuite insérées dans la première, la deuxième, la troisième et la quatrième ouverture de fusée (123, 124, 125, 126) de l'adaptateur d'équipement de travail (120), respectivement.

6. Agencement de liaison de tracteur selon l'une quelconque des revendications précédentes, **caractérisé en ce que**, moyennant quoi les bras de levage de tracteur (12, 13) abaissent l'équipement de travail (20), via l'adaptateur d'équipement de travail (120), les broches de levage (142, 143) respectives, les bras de levage (140, 141) respectifs et les broches de préhension (144, 145) respectives.

7. Agencement de liaison de tracteur selon l'une quelconque des revendications précédentes, **caractérisé en ce que** le premier bras de levage (140) comprend une première broche de levage (142) d'un côté du premier bras de levage (140) et une première broche de préhension (144) de l'autre côté du bras de levage (140) déplacée par rapport à la première broche de levage (142), et en outre **en ce que** le second bras de levage (141) comprend une seconde broche de levage (143) d'un côté du second bras de levage (141) et une seconde broche de préhension (145) de l'autre côté du second bras de levage (141) déplacée par rapport à la seconde broche de levage (143).

8. Agencement de liaison de tracteur selon l'une quelconque des revendications précédentes, **caractérisé en ce que** le premier bras de levage (140) comprend une première broche de levage (142) d'un côté du premier bras de levage (140) et une première broche de préhension (144) de l'autre côté du bras de levage (140) alignée avec la première broche de levage (142) et en outre **en ce que** le second bras de levage (141) comprend une seconde broche de levage (143) d'un côté du second bras de levage (141) et une seconde broche de préhension (145) de l'autre côté du second bras de levage (141) alignée à partir de la seconde broche de levage (143).

9. Agencement de liaison de tracteur selon l'une quelconque des revendications précédentes, **caractérisé en ce que** la deuxième et la quatrième fusée (151, 153) sont fixées au faux cadre (100) et la deuxième et la quatrième ouverture de fusée (124, 126) de l'adaptateur d'équipement de travail (120) sont des fentes, de sorte qu'elles doivent être ajustées sur le dessus de la deuxième et de la quatrième fusée (151, 153) respectivement.

10. Agencement de liaison de tracteur selon l'une quelconque des revendications précédentes, **caractérisé en ce que** différents adaptateurs d'équipement de travail (120) doivent être fixés sur l'équipement de travail (20) différent.
